**Europäisches Patentamt**

**European Patent Office**

**Office européen des brevets**

(11) Veröffentlichungsnummer: **0 520 327 A1**

## (12) EUROPÄISCHE PATENTANMELDUNG

(21) Anmeldenummer: **92110351.1**

(22) Anmeldetag: **19.06.92**

(51) Int. Cl.$^5$: **C04B 28/02**

(30) Priorität: **25.06.91 DE 4120911**

(43) Veröffentlichungstag der Anmeldung:
**30.12.92 Patentblatt 92/53**

(84) Benannte Vertragsstaaten:
**AT BE CH DE FR GB IT LI LU NL**

(71) Anmelder: **Rheinische Kalksteinwerke GmbH.
Wilhelmstrasse 77, Postfach 1340
W-5603 Wülfrath(DE)**

(72) Erfinder: **Spicker, Volker
Zwingenberger Weg 54
W-5603 Wülfrath(DE)**
Erfinder: **Oberste-Padtberg, Rüdiger,
Dr.rer.nat.
Am Elisabethheim 39a
W-5600 Wuppertal 1(DE)**
Erfinder: **Roeder, Alfred, Dr.rer.nat.,Dipl.-Phys.
Falkstrasse 112
W-4100 Duisburg 1(DE)**

(54) **Verfahren zur Verfestigung von staubförmigen Rückständen.**

(57) Bei der Verfestigung von Rückständen der Rauchgasreinigungsanlagen von Müllverbrennungsanlagen oder Rückständen aus der kohlestämmigen Verbrennung oder aus Mischungen von solchen Rückständen durch Vermischen mit hydraulischen Bindemitteln und Wasser führt das komplexe Zusammenwirken der verschiedenen enthaltenen Salze, insbesondere Zink oder andere Buntmetalle in Massenanteilen > 0,25 % zu Schwierigkeiten bei der Verfestigung. Bei dem neuem Verfahren soll eine Anfangsfestigkeit nach einem Tag von mindestens 0,2 N/mm$^2$ und eine Endfestigkeit nach 28 Tagen von mindestens 4 N/mm$^2$ erzielt und dabei der erforderliche Anteil an hydraulischem Bindemittel minimiert werden.

Als hydraulisches Bindemittel wird eine Mischung aus Portlandzement oder Hochofenzement mit Bindemitteln auf Basis von Kalziumaluminat, Alinit und/oder Kalziumsulfat verwendet. Diese hydraulischen Bindemittel werden bei Ausbildung der Anfangsfestigkeit nicht wesentlich durch Verbindungen von Zink oder anderen Buntmetallen beeinträchtigt.

Rückstände aus der Rauchgasreinigung von unter anderem Müllverbrennungsanlagen können sicher verfestigt und wiederverwendet oder deponiert werden.

EP 0 520 327 A1

Die Erfindung betrifft ein Verfahren zur Herstellung von verwertbaren oder deponiefähigen Verfestigungsprodukten aus Rückständen der Rauchgasreinigungsanlagen von Müllverbrennungsanlagen oder Rückständen aus der kohlestämmigen Verbrennung oder aus Mischungen von solchen Rückständen durch Vermischen mit hydraulischen Bindemitteln und Wasser.

Solche staubförmigen Rückstände können aus anlagetechnischen und umwelttechnischen Gründen in der Regel weder verwertet noch deponiert werden, sie müssen erst entsprechend konditioniert werden. Üblicherweise werden die Rückstände mit hydraulischen Bindemitteln und Wasser vermischt und in aushärtbare Produkte überführt, wie zum Beispiel aus US-PS 4,116,705 bekannt.

Die US-PS 4,470,850 offenbart ein Verfahren zur Herstellung von Flugaschezement aus Flugaschen und Portlandzement, bei dem anstelle von Naturgips Abfallprodukte aus der Rauchgasreinigung von Kraftwerken zugesetzt werden. Gips wirkt dabei als Erstarrungsverzögerer.

Aus EP 209 613 A1 ist ein Verfahren bekannt, bei dem zur Deponierung von Kohlekraftwerk-Reststoffen den Verbrennungsrückständen Flugasche und/oder Zement mit einem Gipsanteil zugegeben werden. Die Produkte sollen auch bei Anwesenheit von wasserlöslichen Salzen genügend auslaugbeständig sein. Nachteilig ist, daß die Gemische sehr langsam, nämlich erst im Verlauf von Wochen, abbinden.

Aus DE 37 20 948 A1 ist ein Verfahren bekannt, bei dem beispielsweise Filterstäube und Wirbelschichtaschen mit Zement vermischt und mit Wasser angemacht werden. Die erhaltenen betonartigen Mörtelmischungen werden lagenweise auf die vorgesehene Deponiefläche aufgebracht, gegebenenfalls verdichtet und erstarren zu einem monolithischen Körper. Anstelle der sofortigen Einbringung in den vorgesehenen Deponieraum kann auch zunächst die Herstellung von Formkörpern treten, die nach der Erstarrung und Auslagerung einer Deponie zugeführt werden.

Dabei ist es wesentlich, daß die Anfangsfestigkeit der erstarrenden Mörtelmischung nach einem Tag einen Wert von mindestens 0,2 N/mm$^2$ und die Endfestigkeit nach 28 Tagen mindestens einen Wert von 4 N/mm$^2$ erreicht. Mit dieser Endfestigkeit korrespondiert in der Regel eine erwünschte niedrige Wasserdurchlässigkeit von $k_f \leq 10^{-9}$ m/s.

Für Auflagerungsdeponien hat dies den Vorteil, daß der Deponiekörper ausreichende Standfestigkeit aufweist und bereits nach einem Tag mit Fahrzeugen befahrbar ist. Bei der Herstellung von Formkörpern ist die Anfangsfestigkeit von Bedeutung, um Schalungsmaterial und Lagerfläche zu sparen.

Die chemische Zusammensetzung der eingangs bezeichneten Rückstände oder Rückstandsmischungen schwankt in sehr weiten Grenzen. Insbesondere können Salze enthalten sein, die den Erstarrungsvorgang beeinflussen. Wasserlösliche Salze, wie z. B. Kalziumchlorid können den Verfestigungsvorgang beschleunigen, Verbindungen die Zink oder andere Buntmetalle enthalten, können den Beginn der Verfestigung verzögern.

Das komplexe Zusammenwirken der verschiedenen Salze und der resultierende Einfluß auf das Verfestigungsverhalten ist im einzelnen nicht bekannt. In der Praxis wird daher, um die gewünschte Anfangs- und Endfestigkeit zu erhalten, der Anteil an zugesetztem Bindemittel, wie z. B. Portlandzement oder Hochofenzement auf 25 bis zu 50 % zugesetzt.

Anzustreben ist jedoch eine Minimierung des Bindemittelanteils wegen der verhältnismäßig hohen Kosten für die eingesetzten Zemente und um die Beladungskapazität für schadstoffhaltige Rückstände zu erhöhen, und dadurch wertvollen Deponieraum zu sparen.

Dem Fachmann ist bekannt, daß insbesondere bei Anwesenheit von Verbindungen, die Zink oder andere Buntmetalle enthalten, die Hydratation bei allen solchen Zementen verzögert wird, bei denen die Erhärtung über die Hydratation von Kalziumsilikaten erfolgt. Über die Kalziumsilikatphase erhärten z. B. Portlandzement und Hochofenzement. Im einzelnen wurde festgestellt, daß Rückstände oder Rückstandsmischungen mit geringem Massenanteil an Zink (bis ca. 0,25 %) bei Zusatz von Zement um 22 % in der Trockenmischung und Anmachwasser innerhalb von 24 h auf eine Anfangsfestigkeit von $\geq$ 0,2 N/mm$^2$ aushärten. Mischungen mit hohem Massenanteil an Zink (ca. 1,5 %) zeigen indes erst nach 10 Tagen meßbare Druckfestigkeiten. Verringert man den Zementanteil bei einer entsprechenden Erhöhung des Anteils an zinkreichen Rückständen oder Rückstandsmischungen, so wird sogar nach 28tägiger Feuchtraumlagerung noch keine meßbare Druckfestigkeit erreicht.

Auch die üblichen Beschleuniger wie z. B. Kalziumchlorid und Triethanolamin zeigen bei diesen Mörtelmischungen mit höherem Zinkgehalt keine Wirkung.

Der Erfindung liegt die Aufgabe zugrunde, bei der Verfestigung von Rückständen aus Rauchgasreinigungsanlagen von Müllverbrennungsanlagen oder aus der kohlestämmigen Verbrennung oder Mischungen aus diesen Rückständen eine Anfangsfestigkeit nach 1 Tag von mindestens 0,2 N/mm$^2$ und eine Endfestigkeit nach 28 Tagen von mindestens 4 N/mm$^2$ zu erzielen und dabei den erforderlichen Anteil an hydraulischem Bindemittel zu minimieren.

Dies wird dadurch erreicht, daß bei Massenanteilen an Zink zwischen 0,25 % und 1,9 % in den

2

Rückständen bzw. Rückstandsmischungen als hydraulisches Bindemittel eine Mischung aus Portlandzement oder Hochofenzement mit Bindemitteln auf Basis von Kalziumaluminat, Alinit und/oder Kalziumsulfat verwendet wird. Diese hydraulischen Bindemittel werden bei Ausbildung der Anfangsfestigkeit nicht wesentlich durch Verbindungen von Zink oder anderen Buntmetallen beeinträchtigt. Vorteilhaft ist es, wenn der gesamte Massenanteil an hydraulischen Bindemitteln bezogen auf die gesamte Trockenmischung mindestens 10 und höchstens 22 % beträgt. Bei geringeren Anteilen als 10 % werden die angestrebten Festigkeitswerte nicht erreicht, höhere Anteile als 22 % bringen keine nutzbare Verbesserung, sondern nur unnötig höhere Kosten. Das Mischungsverhältnis von Bindemittel auf Basis von Kalziumaluminat, Alinit und/oder Kalziumsulfat zu Portland- oder Hochofenzement wird vorzugsweise zwischen 1 : 2 bis 1 : 6 eingestellt. Eine weitere vorteilhafte Ausgestaltung besteht darin, als hydraulisches Bindemittel Alinitzement nicht nur in Mischung mit Portland- oder Hochofenzement einzusetzen, sondern ausschließlich Alinitzement einzusetzen, in Massenanteilen bezogen auf die gesamte Trockenmischung von 10 bis 22 %. Der Alinitzement kann einen Massenanteil an Chloriden bis zu 9 % und einen Massenanteil an Freikalk bis zu 4 % aufweisen, wie an sich aus DE 39 06 617 C1 bekannt.

Der besondere Vorteil des erfindungsgemäßen Verfahrens besteht darin, daß von den den Verfestigungsverlauf beeinflussenden Gehalten an wasserlöslichen Salzen, Zinkverbindungen etc. in den für die Deponierung vorgesehenen Rückständen bzw. Rückstandsmischungen ausschließlich der analytische Zinkgehalt berücksichtigt werden muß, sowohl im Hinblick auf den zuzuschlagenden Anteil an hydraulischem Bindemittel als auch im Hinblick auf die Bindemittelsorte; dieser gefundene Zusammenhang vom Zinkgehalt ist praktisch unabhängig vom Gehalt an wasserlöslichen Salzen bis zu einer Gesamtmenge an wasserlöslichen Salzen von ca. 25 % in den Rückständen bzw. Rückstandsmischungen.

Die Erfindung wird nachstehend anhand von Ausführungsbeispielen erläutert.

Beispiel 1

Nach Stand der Technik führt die Verfestigung von Rückständen mit geringem Zinkgehalt bei Verwendung von Portlandzement als einzigem hydraulischem Bindemittel und bei einem Bindemittelgehalt von 22 % und weniger zu ausreichenden Festigkeitswerten wie in Tabelle 1 gezeigt. Bezogen auf die Rückstandsmischung von MVA-Rückstand und Flugasche beträgt der Zinkgehalt 0,019 % (Beispiel 1 a) bis 0,021 % (Beispiel 1 c).

## Tabelle 1

| Beispiel 1 | a | b | c |
|---|---|---|---|
| **Massenanteile in %** | | | |
| MVA-Rückstand mit 0,03 % Zn | 50 | 57 | 62 |
| Kohlestämmige Flugasche | 28 | 28 | 28 |
| Portlandzement | 22 | 15 | 10 |
| **Druckfestigkeiten in N/mm²** | | | |
| 1 d | 5,1 | 4,0 | 2,9 |
| 7 d | 9,2 | 4,9 | 3,0 |
| 28 d | 14,8 | 8,6 | 5,3 |

Beispiel 2

Zur Demonstration des Zink-Grenzwertes wurde eine Rückstandsmischung mit einem Gesamtgehalt an Zink von 0,25 % eingesetzt und nach Stand der Technik mit 22 % Portlandzement und Wasser angemacht.

Tabelle 2 zeigt, daß die Anfangsfestigkeitswerte nach einem Tag gerade eben den angestrebten Wert von 0,2 N/mm$^2$ erreichen.

## Tabelle 2

| Beispiel 2 | a |
|---|---|
| | **Massenanteile in %** |
| MVA-Rückstand mit 0,39 % Zn | 50 |
| Kohlestämmige Flugasche | 28 |
| Portlandzement | 22 |
| | **Druckfestigkeiten in N/mm²** |
| 1 d | 0,2 |
| 7 d | 2,9 |
| 28 d | 12,7 |

Beispiel 3

Zur Verfestigung von Rückständen mit höherem Zinkgehalt wurden Mischungen von Portlandzement mit Kalziumaluminat (Tonerdezement) verwendet. Behandelt wurde ein Rückstand aus der Rauchgasreinigung einer Hausmüllverbrennungsanlage mit einem Massenanteil an Zink von 1,9 %. Von diesem Rückstand werden zunächst 80 Teile mit 20 Teilen Portlandzement gemischt und mit Wasser zu einer pastösen Konsistenz angemacht. Dieser Mörtel erreicht nach 28 d Feuchtraumlagerung bei 20 °C noch keine meßbaren Druckfestigkeiten (Beispiel 3 a). Setzt man statt Portlandzement eine Mischung von Portlandzement mit ansteigendem Gehalt an Kalziumaluminat, und zwar im Verhältnis von Tonerdezement zu Portlandzement von 1 : 19 (Beispiel 3 b) bis 1 : 3 (Beispiel 3 f) ein, so erhält man in Abhängigkeit vom Mischungsverhältnis die in der nachfolgenden Tabelle aufgeführten Druckfestigkeiten. Wie zu sehen ist, erreichen die Mischungen 3 d - 3 f ausreichende Anfangsfestigkeiten und im Beispiel 3 f wird auch eine mit mehr als 4 N/mm$^2$ ausreichend hohe 28-Tage-Druckfestigkeit erreicht.

Tabelle 3

| Beispiel 3 | a | b | c | d | e | f |
|---|---|---|---|---|---|---|
| Massenanteile in % | | | | | | |
| MVA-Rückstand mit 1,9 % Zn | 80 | 80 | 80 | 80 | 80 | 80 |
| Portlandzement | 20 | 19 | 18 | 17 | 16 | 15 |
| Tonerdezement | 0 | 1 | 2 | 3 | 4 | 5 |
| Druckfestigkeiten in N/mm² | | | | | | |
| 1 d | – | – | – | 0,5 | 0,7 | 0,8 |
| 2 d | – | – | 0,4 | 0,6 | 1,0 | 1,2 |
| 7 d | – | 0,4 | 0,4 | 0,6 | 1,8 | 2,0 |
| 28 d | – | 0,4 | 0,6 | 0,6 | 3,3 | 4,6 |

Beispiele 4 bis 7

In den Beispielen 4 bis 7 wurden unterschiedliche Rückstandsmischungen (staubförmige Müllverbrennungsrückstände und zwei unterschiedliche kohlestämmige Flugstäube I und II) verwendet. Die Rückstandsmischungen weisen einen Massenanteil an Zink von 0,72 % (Beispiele 4 und 5) und 0,83 % (Beispiele 6 und 7) auf. Die Rückstandsmischungen wurden mit 22 % Bindemittel unter Wasserzugabe gemischt und bei 20 °C im Feuchtraum gelagert. Die jeweils mit a) bezeichneten Beispiele geben den Stand der Technik wieder. Bei den jeweils mit b) bezeichneten Beispielen wurde nach dem erfindungsgemäßen Verfahren eine Mischung von Tonerdezement mit Portlandzement im Mischungsverhältnis 1 : 3,4 eingesetzt. Der Druckfestigkeitsaufbau ist in der folgenden Tabelle 4 angegeben.

Tabelle 4

| Beispiel | 4 | | 5 | | 6 | | 7 | |
|---|---|---|---|---|---|---|---|---|
| | a | b | a | b | a | b | a | b |
| **Massenanteile in %** | | | | | | | | |
| MVA-Rest-stoff mit 0,03 % Zn | 25 | 25 | 25 | 25 | | | | |
| MVA-Rest-stoff mit 0,4 % Zn | | | | | 25 | 25 | 25 | 25 |
| MVA-Rest-stoff mit 2,2 % Zn | 25 | 25 | 25 | 25 | 25 | 25 | 25 | 25 |
| Kohlestäm-mige Flug-asche I*) | 28 | 28 | | | 28 | 28 | | |
| II | | | 28 | 28 | | | 28 | 28 |
| Portland-zement | 22 | 17 | 22 | 17 | 22 | 17 | 22 | 17 |
| Tonerde-zement | | 5 | | 5 | | 5 | | 5 |
| **Druckfestigkeiten in N/mm²** | | | | | | | | |
| 1 d | – | 0,5 | – | 0,6 | – | 0,2 | – | 0,4 |
| 2 d | – | n.b. | – | n.b. | – | 0,4 | – | n.b. |
| 7 d | 1,4 | 2,4 | 1,6 | 2,6 | 0,6 | 1,2 | 0,6 | 1,2 |
| 28 d | 6,1 | 5,5 | 6,3 | 8,6 | 5,5 | 6,3 | 7,1 | 10,3 |

*) Die kohlestämmigen Flugaschen I und II unterscheiden sich geringfügig durch ihre Zusammensetzung und zusätzlich durch ihren unterschiedlichen Wasseranspruch. Dieser Unterschied resultiert aus unterschiedlichen Korngrößenverteilungen.

Es zeigt sich also deutlich, daß die Verwendung einer Mischung von Tonerdezement mit Portlandzement oder Hochofenzement im Verhältnis 1 : 3,4 bei einem Massenanteil dieser Mischung von 22 % die verzögernde Wirkung hauptsächlich von Zink aufheben kann.

Beispiel 8

Zu einer Rückstandsmischung mit 0,83 % Zink wurde nach dem erfindungsgemäßen Verfahren als hydraulisches Bindemittel ein Alinitzement mit einem Anteil an Freikalk von 1,57 % eingesetzt. Die Ergebnisse sind in Tabelle 5 wiedergegeben.

## Tabelle 5

| Beispiel | 8 |
|---|---|
| **Massenanteile in %** | |
| MVA-Reststoff mit 0,4 % Zn | 25 |
| MVA-Reststoff mit 2,2 % Zn | 25 |
| Kohlestämmige Flugasche | 28 |
| Alinitzement | 22 |
| **Druckfestigkeiten in N/mm²** | |
| 1 d | 0,6 |
| 7 d | 2,4 |
| 28 d | 5,7 |

Die Verwendung von Alinitzement alleine in einem Massenanteil von 22 % in der Mischung reicht danach ebenfalls aus, um eine ausreichende Festigkeit von > 0,2 N/mm$^2$ nach einem Tag und 4 N/mm$^2$ nach 28 Tagen sicher zu erreichen.

**Patentansprüche**

1. Verfahren zur Herstellung von verwertbaren oder deponiefähigen Verfestigungsprodukten aus Rückständen der Rauchgasreinigungsanlagen von Müllverbrennungsanlagen oder aus Rückständen aus der kohlestämmigen Verbrennung oder aus Mischungen von solchen Rückständen durch Vermischen mit hydraulischen Bindemitteln und Wasser, dadurch gekennzeichnet, daß bei Massenanteilen an Zink zwischen 0,25 % und 1,9 % in den Rückständen bzw. Rückstandsmischungen als hydraulisches Bindemittel eine Mischung aus Portlandzement oder Hochofenzement mit Bindemitteln auf der Basis von Kalziumaluminat, Alinit oder Kalziumsulfat verwendet wird.

2. Verfahren nach Anspruch 1, dadurch gekennzeichnet, daß der Anteil an hydraulischem Bindemittel bezogen auf die gesamte Trockenmischung mindestens 10 und höchstens 22 % beträgt.

3. Verfahren nach Anspruch 1 oder 2, dadurch gekennzeichnet, daß das Mischungsverhältnis von Bindemittel auf Basis von Kalziumaluminat, Alinit oder Kalziumsulfat zu Portland- oder Hochofenzement eingestellt wird zwischen 1 : 2 bis 1 : 6.

4. Verfahren nach Anspruch 1, dadurch gekennzeichnet, daß als hydraulisches Bindemittel ausschließlich Alinitzement in Massenanteilen von mindestens 10 und höchstens 22 % eingesetzt wird.

5. Verfahren nach Anspruch 4, dadurch gekennzeichnet, daß ein Alinitzement mit einem Massenanteil an Chloriden bis 9 % und einem Massenanteil an Freikalk bis 4 % eingesetzt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 109 506 (OTTO A. MÜLLER GMBH)<br>* Zusammenfassung; Ansprüche 1-4 *<br>* Seite 2, Zeile 10 - Seite 3, Zeile 16 *<br>* Seite 4, Zeile 1 - Zeile 5 *<br>* Seite 9, Zeile 24 - Seite 10, Zeile 4 *<br>* Seite 12, Zeile 6 - Zeile 20 *<br>--- | 1-2 | C04B28/02 |
| X | GB-A-940 692 (HOUILLIERES DU BASSIN DE LA LOIRE)<br>* Seite 1, Zeile 15 - Zeile 79 *<br>* Seite 2, Zeile 7 - Zeile 18 *<br>* Ansprüche 1,3-6; Beispiel 10 * | 1-3 | |
| A | | 5 | |
| | --- | | |
| D,X | GB-A-2 084 985 (L & C STEINMÜLLER GMBH)<br>* Zusammenfassung; Ansprüche 1,4-5 *<br>* Seite 1, Zeile 34 - Zeile 61 *<br>--- | 1-3 | |
| X | EP-A-0 157 749 (CEMENTA AB)<br>* Zusammenfassung; Ansprüche 1-4 *<br>* Seite 1, Zeile 21 - Seite 2, Zeile 34 *<br>* Seite 8, Zeile 5 - Zeile 29 *<br>* Seite 9, Zeile 21 - Seite 10, Zeile 18 *<br>--- | 1-3 | RECHERCHIERTE SACHGEBIETE (Int. Cl.5) |
| D,A | DE-A-3 906 617 (RHEINISCHE KALKSTEINWERKE GMBH)<br>* Zusammenfassung; Ansprüche 1-2,5-9 *<br>* Seite 1, Zeile 10 - Zeile 26 *<br>* Seite 1, Zeile 60 - Seite 2, Zeile 12 *<br>* Seite 4, Zeile 11 - Zeile 55 *<br><br>----- | 4-5 | C04B |

Der vorliegende Recherchenbericht wurde für alle Patentansprüche erstellt

| Recherchenort | Abschlußdatum der Recherche | Prüfer |
|---|---|---|
| DEN HAAG | 05 OKTOBER 1992 | OLSSON S.A. |

EPO FORM 1503 03.82 (P0403)